# FASCICULE DE BREVET EUROPEEN

(11) **EP 3 587 829 B1**
(45) Date de publication et mention de la délivrance du brevet: **05.05.2021**
(21) Numéro de dépôt: 19181397.1
(22) Date de dépôt: 19.06.2019
(51) Int. Cl.: F15B 13/042

(54) **PROCÉDÉ DE COMMANDE D'UN DISTRIBUTEUR À TIROIR À TROIS POSITIONS**
VERFAHREN ZUR STEUERUNG EINES EINEN SCHIEBER AUFWEISENDEN WEGEVENTILS MIT DREI POSITIONEN
METHOD FOR CONTROLLING A DIRECTIONAL CONTROL SPOOL VALVE WITH THREE POSITIONS

(30) Priorité: 27.06.2018 FR 1855783
(43) Date de publication de la demande: 01.01.2020
(73) Titulaire: Safran Landing Systems, 78140 Vélizy-Villacoublay (FR)
(72) Inventeur: JUBERT, Xavier, 77550 Moissy-Cramayel (FR); LECLERC, Xavier, 77550 Moissy-Cramayel (FR); ERNIS, Sébastien, 77550 Moissy-Cramayel (FR)
(74) Mandataire: Lavialle, Bruno François Stéphane

(56) Documents cités:
- FR-A1- 2 214 051

## Description

L'invention concerne un procédé de commande d'un distributeur hydraulique à commande hydraulique à trois positions dont une position centrale stable.

### ARRIERE PLAN DE L'INVENTION

On connaît des distributeurs hydrauliques à tiroir monté mobile dans un corps et rappelé vers une position centrale stable par des ressorts de centrage. Le tiroir est déplaçable dans des positions extrêmes de part et d'autre de la position centrale par l'amenée d'un fluide sous pression dans des chambres de commande respectives. Ces distributeurs sont notamment utilisés pour alimenter les chambres d'un vérin de manœuvre d'un atterrisseur d'aéronef entre une position rétractée et une position déployée, ou encore les chambres d'un vérin de manœuvre de trappes fermant la soute qui reçoit l'atterrisseur en position rétractée. En général le distributeur est du type à quatre voies avec un port d'alimentation, un port de retour, et deux ports de service connectés aux chambres du vérin. Dans les positions extrêmes, le distributeur connecte le port d'alimentation à l'une des chambres, et le port de retour à l'autre chambre. Dans la position centrale, le distributeur connecte les deux chambres au port de retour.

Un procédé de commande d'un distributeur selon le préambule de la revendication 1 est connu du document FR 2 214 051.

Sur certains aéronefs dont la pression d'alimentation est particulièrement élevée (typiquement 350 bars), on a pu constater des pics de pression lors d'un changement de direction dans le mouvement commandé par le vérin. Le changement de direction implique de mettre la chambre de commande du tiroir qui était pressurisée au retour, et mettre l'autre chambre de commande sous pression, pour faire transiter le tiroir d'une position extrême à l'autre. Lors de cette interversion, les conduites reliant le distributeur au vérin sont mises au retour lorsque le tiroir passe par la position centrale, ce qui induit une brusque chute de pression dans la ligne qui était pressurisée. Ces pics de pression sont certainement dus à la dépressurisation des conduites passant brusquement de la pression d'alimentation à la pression de retour.

### OBJET DE L'INVENTION

L'invention vise à proposer un procédé de commande du distributeur permettant de diminuer ces pics de pression.

### PRESENTATION DE L'INVENTION

En vue de la réalisation de ce but, on propose un procédé de commande d'un distributeur hydraulique comportant un port d'alimentation, un port de retour et deux ports de service, et un tiroir monté mobile dans un corps entre deux positions extrêmes dans l'une desquelles le tiroir met en communication le port d'alimentation avec l'un des ports de service et le port de retour avec l'autre des ports de service, et dans l'autre desquelles au moins celui des ports de service qui était mis en communication avec le port de retour est mis en communication avec le port d'alimentation, en passant par une position centrale stable dans laquelle le distributeur met le port de retour en communication avec les deux ports de service, le corps délimitant des première et seconde chambres de commande du tiroir, le procédé comprenant :
- la mise sous pression de la première chambre de commande et la mise au retour de la seconde chambre de commande provoquant le déplacement du tiroir dans l'une des positions extrêmes ;
- puis la mise sous pression de la seconde chambre de commande et la mise au retour de la première chambre de commande provoquant le déplacement du tiroir dans l'autre des positions extrêmes.

Selon l'invention, le procédé comporte l'étape, intermédiaire entre les étapes précitées, de mettre sous pression la chambre de commande qui est au retour de sorte que les deux chambres soient simultanément maintenues sous pression pendant un temps déterminé.

La mise en pression simultanée des deux chambres de commande en pression neutralise les efforts hydrauliques s'exerçant sur le tiroir. Celui-ci revient vers la position centrale sous le seul effet des ressorts de centrage et, les pressions ainsi maintenues empêchant le tiroir d'osciller. Le mouvement du tiroir est bien plus progressif, de sorte que la conduite associée au port de sortie connecté à l'alimentation est progressivement dépressurisée, ce qui diminue le risque de pic de pression. Puis, après un temps déterminé, il suffit de couper la pression dans la chambre de commande qui était initialement pressurisée pour amener le tiroir dans l'autre position extrême, de sorte que le temps de commutation du tiroir d'une position extrême à l'autre est rapide.

### DESCRIPTION DES FIGURES

L'invention sera mieux comprise à la lumière de la description qui suit d'un mode particulier de réalisation de l'invention, en référence aux figures des dessins annexés parmi lesquelles :
- la figure 1 est un schéma hydraulique illustrant un vérin alimenté par un distributeur, selon une disposition connue en soi ;
- la figure 2 est un chronogramme des pressions dans les deux chambres de commande du distributeur.

### DESCRIPTION DETAILLEE DE L'INVENTION

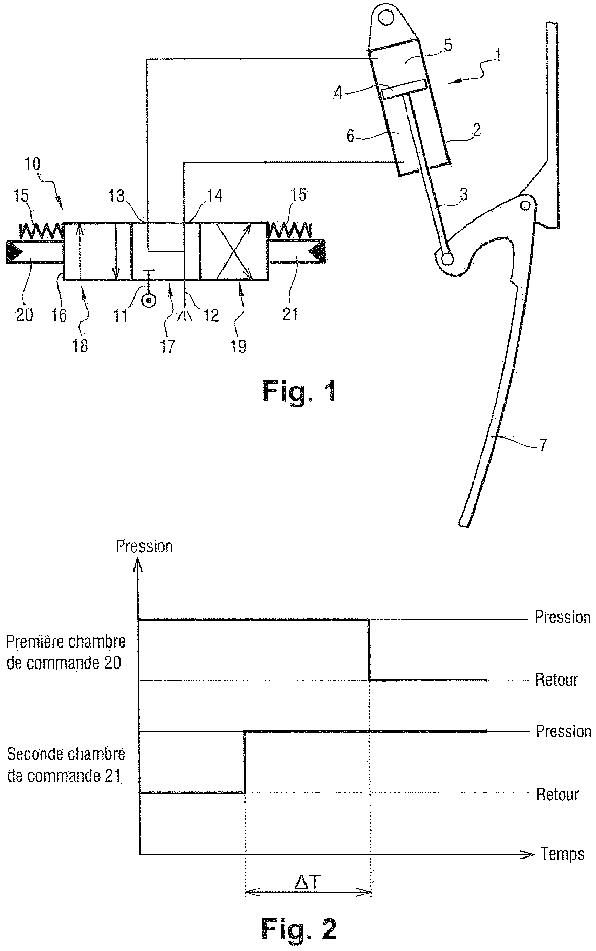

Le schéma hydraulique illustré à la figure 1 concerne l'alimentation en fluide hydraulique d'un vérin 1 comportant un corps 2 dans lequel une tige 3 coulisse en étant associée à un piston 4 qui définit dans le corps 2 une chambre de sortie 5 et une chambre de rentrée 6. Le vérin sert par exemple à manœuvrer une porte 7 de soute d'atterrisseur d'aéronef. Pendant la séquence de déploiement de l'atterrisseur, la porte est ouverte puis fermée. Les deux chambres 5, 6 du vérin 1 sont alimentées en fluide sous pression grâce à un distributeur 10 comportant un port d'alimentation 11, un port de retour 12, et des ports de services 13,14 respectivement reliés à la chambre de sortie 5 et la chambre de rentrée 6 du vérin 1. Le distributeur 10 comporte un corps dans lequel un tiroir 16 est monté coulissant. Le tiroir 16 est rappelé vers une position centrale stable 17 par des ressorts de centrage 15. Dans cette position, le tiroir 16 connecte les ports de service 13,14 au port de retour 12 de sorte que les deux chambres 5,6 du vérin 1 sont au retour. Le tiroir 16 peut être déplacé vers des première et seconde positions extrêmes 18, 19 de part et d'autre de la position centrale dans lesquelles, respectivement :
- le port d'alimentation 11 est connecté à la chambre de sortie 5 et le port de retour 12 est connecté à la chambre de rentrée 6 ;
- le port d'alimentation 11 est connecté à la chambre de rentrée 6 et le port de retour 12 est connecté à la chambre de sortie 5.

Le corps du distributeur 10 délimite une première et seconde chambres de commande 20,21 (représentées par le symbole normalisé en triangle noir sur la figure). Le déplacement du tiroir 16 vers la première position extrême 18 s'obtient en pressurisant la première chambre de commande 20 et en mettant la seconde chambre de commande 21 au retour. Le déplacement du tiroir 16 vers la seconde position extrême 19 s'obtient en pressurisant la seconde chambre de commande 21 et en mettant la première chambre de commande 20 au retour. Tout ceci est bien connu est n'est rappelé qu'à titre d'illustration.

Dans certaines séquences, on a besoin de commander l'extension du vérin 1, puis sa rétraction. Il peut s'agir par exemple d'ouvrir et fermer la porte de soute 7 quand l'atterrisseur est déployé. Selon l'invention, on procède comme suit :
- lorsque l'extension du vérin est commandée, la première chambre de commande 20 est pressurisée tandis que la deuxième chambre de commande 21 est mise au retour, ce qui provoque le déplacement du tiroir 16 vers la première position extrême 18 et donc l'extension du vérin 1 ;
- puis quand la rétraction est commandée, la deuxième chambre de commande 21 est mise sous pression, ce qui équilibre les efforts hydrauliques sur le tiroir 16, qui revient donc vers la position centrale 17 sous l'action des ressorts de centrage 15 ;
- enfin, après un temps déterminé ΔT, la première chambre de commande 20 est mise au retour, ce qui provoque le déplacement du tiroir 16 (rapide) vers la deuxième position extrême 19, et donc la rétraction du vérin 1.
Le temps ΔT est choisi pour laisser le temps au tiroir 16 de revenir à la position centrale 17, ce qui permet de mettre les conduites reliant le distributeur 10 au vérin 1 et les chambres 5,6 du vérin 1 au retour.

L'étape intermédiaire consistant à pressuriser simultanément les deux chambres de commande 20,21 du distributeur 10 permet de décomposer les différentes pressurisations et dépressurisations des conduites et des chambres du vérin lors du changement de sens de mouvement de celui-ci, diminuant le risque de pics de pression. En outre, cette pressurisation simultanée des chambres de commande 20,21 diminue le risque d'oscillation du tiroir 16 pouvant donner lieu à des oscillations de pression dans les conduites et les chambres du vérin.

L'invention n'est pas limitée à ce qui vient d'être décrit mais englobe au contraire toute variante entrant dans le cadre défini par la revendication.

En particulier, l'invention s'applique aussi bien à la commande d'un mouvement d'extension/rétraction du vérin, comme décrit ici, qu'à un mouvement de rétraction/extension du vérin, comme celui qui est par exemple effectué pour ouvrir la porte. La rétraction du vérin alors que la porte est fermée permet de soulager le crochet de verrouillage pour faciliter son désengagement, avant d'ouvrir la porte en commandant l'extension du vérin.

En outre, bien que le procédé de l'invention illustré ici est appliqué à un distributeur à trois positions et quatre voies, dont les deux ports de services sont mis en communication avec le port d'alimentation ou le port de retour, avec interversion des deux mises en communication d'une position extrême à l'autre, le procédé peut être appliqué à d'autres types de distributeurs, notamment ceux qui, dans l'une des positions extrêmes, mettent les deux ports de service en communication avec le port d'alimentation, pour assurer une extension du vérin par action différentielle de la pression dans les deux chambres.

## Revendications

1. Procédé de commande d'un distributeur hydraulique comportant un port d'alimentation (11), un port de retour (12) et deux ports de service (13,14), et un tiroir (16) monté mobile dans un corps entre deux positions extrêmes (18,19) dans l'une desquelles (18) le tiroir met en communication le port d'alimentation avec l'un des ports de service et le port de retour avec l'autre des ports de service, et dans l'autre desquelles (19) au moins celui des ports de service qui était mis en communication avec le port de retour est mis en communication avec le port d'alimentation, en passant par une position centrale (17) stable dans laquelle le distributeur met le port de retour en communication avec les deux ports de service, le corps délimitant des première et seconde chambres de commande (20,21) du tiroir, le procédé comprenant :
- la mise sous pression de la première chambre de commande (20) et la mise au retour de la seconde chambre de commande (21) provoquant le déplacement du tiroir dans l'une des positions extrêmes ;
- puis la mise sous pression de la seconde chambre de commande (21) et la mise au retour de la première chambre de commande (20) provoquant le déplacement du tiroir dans l'autre des positions extrêmes ;
**caractérisé en ce que** le procédé comporte l'étape intermédiaire, entre les étapes précitées, de mettre sous pression la chambre de commande (21) qui est au retour de sorte que les deux chambres soient simultanément maintenues sous pression pendant un temps déterminé (ΔT).

## Patentansprüche

1. Verfahren zum Steuern eines Hydraulikverteilers, umfassend eine Zuführungsöffnung (11), eine Rücklauföffnung (12) und zwei Betriebsöffnungen (13, 14), sowie einen Schieber (16), der in einem Gehäuse zwischen zwei Endpositionen (18, 19) beweglich gelagert ist, wobei der Schieber in einer der Endpositionen (18) die Zuführungsöffnung mit einer der Betriebsöffnungen in Verbindung bringt und die Rücklauföffnung mit der anderen der Betriebsöffnungen in Verbindung bringt, und in der anderen der Endpositionen (19) nur diejenige der Betriebsöffnungen, die mit der Rücklauföffnung in Verbindung gebracht war, mit der Zuführungsöffnung in Verbindung gebracht wird, während er über eine stabile zentrale Position (17) hinwegläuft, in der der Verteiler die Rücklauföffnung mit den beiden Betriebsöffnungen in Verbindung bringt, wobei das Gehäuse eine erste und eine zweite Steuerkammer (20, 21) zum Steuern des Schiebers begrenzt, wobei das Verfahren umfasst:
- das Unter-Druck-Setzen der ersten Steuerkammer (20) und das Umschalten-auf-Rücklauf der zweiten Steuerkammer (21), was die Verschiebung des Schiebers in eine der Endpositionen verursacht;
- und dann das Unter-Druck-Setzen der zweiten Steuerkammer (21) und das Umschalten-auf-Rücklauf der ersten Steuerkammer (20), was die Verschiebung des Schiebers in die andere der Endpositionen verursacht;
**dadurch gekennzeichnet, dass** das Verfahren zwischen den vorgenannten Schritten den Zwischenschritt des Unter-Druck-Setzens der Steuerkammer (21) umfasst, die auf Rücklauf geschaltet ist, sodass die beiden Kammern für eine vorbestimmte Zeit (ΔT) gleichzeitig unter Druck gehalten werden.

## Claims

1. A method of controlling a hydraulic valve having a feed port (11), a return port (12), and two service ports (13, 14), together with a slide (16) that is movably mounted in a body to move between two end positions (18, 19) in one of which (18) the slide puts the feed port into communication with one of the service ports and the return port into communication with the other service port, and in the other of which (19) at least that one of the service ports which was in communication with the return port is put into communication with the feed port, through a stable central position (17) in which the valve puts the return port into communication with one of the two service ports, the cylinder defining first and second control chambers (20, 21) for controlling the slide, the method comprising:
- putting the first control chamber (20) under pressure and putting the second control chamber (21) to return so as to cause the slide to move into one of the end positions; and
- then putting the second control chamber (21) under pressure and putting the first control chamber (20) to return so as to cause the slide to move into the other one of the end positions;
the method being **characterized in that** it includes an intermediate step, between the two above-mentioned steps, of applying pressure to the control chamber (21) that was connected to return so that both chambers are maintained simultaneously under pressure for a determined length of time (ΔT).
